# EUROPÄISCHE PATENTSCHRIFT

(11) **EP 2 097 282 B1**
(45) Veröffentlichungstag und Bekanntmachung des Hinweises auf die Patenterteilung: **20.07.2011**
(21) Anmeldenummer: 07821619.9
(22) Anmeldetag: 22.10.2007
(51) Int. Cl.: B60K 6/20, B60W 20/00, F02D 17/02

(54) **HYBRIDANTRIEB MIT VENTILABSCHALTUNG**
HYBRID DRIVE WITH VALVE DEACTIVATION
ENTRAÎNEMENT HYBRIDE AVEC DÉSACTIVATION DE SOUPAPES

(30) Priorität: 27.11.2006 DE 102006055800
(43) Veröffentlichungstag der Anmeldung: 09.09.2009
(73) Patentinhaber: Robert Bosch GmbH, 70442 Stuttgart (DE)
(72) Erfinder: SEILS, Wolfgang, 71640 Ludwigsburg (DE)
(86) Internationale Anmeldenummer: PCT/EP2007/061255
(87) Internationale Veröffentlichungsnummer: WO 2008/064961

(56) Entgegenhaltungen:
- EP-A- 1 236 604
- WO-A-2005/045217
- DE-A1-102005 001 047
- DE-A1-102005 001 245
- FR-A- 2 885 177
- FR-A1- 2 885 177

## Beschreibung

### Stand der Technik

Aus dem Stand der Technik sind verschiedene Arten von Kraftfahrzeugen mit Hybridantrieben bekannt. Derartige Hybridantriebe weisen üblicherweise mindestens einen Verbrennungsmotor und mindestens eine Elektromaschine auf. Die mindestens eine Elektromaschine kann während des Betriebs individuell zu- und abgeschaltet werden. Weiterhin ist ein zusätzlicher Energiespeicher vorgesehen, bei welchem es sich üblicherweise um eine oder mehrere Batterien und/oder Akkumulatoren handelt. Aus dem Energiespeicher wird die Elektromaschine mit elektrischer Energie versorgt. Umgekehrt kann aus der Elektromaschine elektrische Energie zurückgewonnen werden und, beispielsweise bei einer so genannten Bremsenergie-Rekuperation, wieder in dem Energiespeicher abgespeichert werden.

Eine Problematik bei der Verbindung des mindestens einen Verbrennungsmotors mit der mindestens einen Elektromaschine besteht darin, dass in der Regel zwischen diesen beiden Antriebseinheiten eine Trennkupplung und/oder ein aufwändiges Getriebe vorgesehen sein muss, um die verschiedenen Motoren unabhängig voneinander betreiben zu können. Derartige Trennkupplungen und/oder Getriebe sind jedoch aufwändig, schwer und beinhalten einen vergleichsweise hohen Bauraum. Es wäre daher wünschenswert, den Verbrennungsmotor in seinem Betriebszustand "abgestuft" betreiben zu können. Derartige "abgestufte" Betriebsmodi sind aus dem Bereich reiner Verbrennungsmotoren bereits aus dem Stand der Technik bekannt und basieren auf dem Prinzip der Ventilabschaltung. So sind bereits kommerziell Verbrennungsmotoren erhältlich, welche in einem Teillastbetrieb gefahren werden können, in welchem von den vorhandenen Zylindern nicht alle betrieben werden. In der Regel wird dabei nur die halbe Zylinderzahl betrieben. So ist beispielsweise bei V-Motoren ein Betriebsmodus bekannt, bei welchem mit einer Bankabschaltung gearbeitet wird, da hier eine ganze Zylinderbank im Teillastbetrieb abgeschaltet wird. Im Allgemeinen wird jeder zweite Zylinder in der Zündabfolge abgeschaltet, so dass häufig auch von einem Halbmotorbetrieb (HMB) die Rede ist.

Aus dem Stand der Technik sind bereits Ansätze bekannt, das Prinzip der Zylinderabschaltung auf Hybridantriebe zu übertragen. So beschreibt US 2005/0257967 A1 einen Antriebsstrang für einen Hybridantrieb. Der Hybridantrieb weist einen Verbrennungsmotor mit einer Mehrzahl von Zylindern auf, welche jeweils eine Mehrzahl deaktivierbarer Einlass- und Auslassventile aufweisen. Mittels eines Steuergeräts können die Ventile abgeschaltet werden. Somit kann der Rotor des Elektromotors des Hybridantriebs kontinuierlich operativ verbunden sein mit der Kurbelwelle des Verbrennungsmotors, so dass auf eine entsprechende Kupplung verzichtet werden kann.

Die in US 2005/0257967 A1 gezeigte Vorrichtung weist jedoch in der Praxis einen entscheidenden Nachteil auf, welcher darin besteht, dass bei Abschalten einzelner Zylinder Öl aus dem Kurbelgehäuse in den Verbrennungsraum gesaugt wird. Demzufolge tritt beim erneuten Starten des zuvor abgeschalteten Zylinders insbesondere eine erhöhte Schadstoffemission auf sowie ein vorübergehend stark verschlechterter Wirkungsgrad.

### Offenbarung der Erfindung

Erfindungsgemäß wird daher ein Hybridantrieb und ein Verfahren zur Steuerung eines Hybridantriebs sowie ein entsprechendes Computerprogramm vorgeschlagen, mittels derer die Nachteile der aus dem Stand der Technik bekannten Vorrichtungen vermieden werden können.

Der vorgeschlagene Hybridantrieb weist mindestens einen Verbrennungsmotor mit mindestens zwei Zylindern auf. Weiterhin ist mindestens eine Elektromaschine mit mindestens einer Elektromotorfunktion und mindestens einer Generatorfunktion vorgesehen. Je nach Ausgestaltung des Hybridantriebs (z. B. Parallelhybrid, verzweigter Hybridantrieb) können die mindestens eine Elektromotorfunktion und die mindestens eine Generatorfunktion in getrennten Komponenten oder auch in ein und derselben Komponente vorgesehen sein.

Der Hybridantrieb ist eingerichtet, um in einem Volllastbetrieb betrieben zu werden, bei welchem alle Zylinder des mindestens einen Verbrennungsmotors betrieben werden. Weiterhin ist mindestens ein Teillastbetrieb vorgesehen, bei welchem mindestens einer der mindestens zwei Zylinder abgeschaltet ist und bei welchem mindestens ein weiterer der mindestens zwei Zylinder des mindestens einen Verbrennungsmotors betrieben wird. In dem mindestens einen Teillastbetrieb ist der mindestens eine abgeschaltete Zylinder mit Druck, insbesondere einem Überdruck durch zuletzt verbranntes Verbrennungsgemisch, beaufschlagt. Diese Druckbeaufschlagung erfolgt dadurch, dass beim Abschalten der mindestens eine abzuschaltende Zylinder mit Verbrennungsgemisch befüllt wird und anschließend ein Zündvorgang gestartet wird, wobei Ventile des mindestens einen Zylinders geschlossen sind, so dass der mindestens eine Zylinder mit einem Überdruck durch Verbrennungsgase beaufschlagt ist.

Vorteilhafterweise ist mindestens ein Lastregler und/oder mindestens ein Motorsteuerungsgerät vorgesehen, welche ausgestaltet sind, um eine Sollleistung und/oder eine Solldrehzahl und/oder ein Solldrehmoment des mindestens einen Verbrennungsmotors zu ermitteln und entsprechend dieser ermittelten Kennzahl den Volllastbetrieb und/oder einen Teillastbetrieb als geeignetsten Betriebsmodus auszuwählen.

Vorteilhafterweise kann auf ein Kupplungselement und/oder ein Verteilergetriebe zwischen dem mindestens einen Verbrennungsmotor und der mindestens einen Elektromaschine verzichtet werden. Wird dennoch entschieden, ein Kupplungselement und/oder ein Verteilergetriebe vorzusehen, so kann beispielsweise ein zwei- oder mehrstufiges Getriebe vorgesehen sein, welches mindestens eine dem Volllastbetrieb zugeordnete erste Stufe und mindestens eine weitere, dem mindestens einen Teillastbetrieb zugeordnete weitere Stufe aufweist. Alternativ oder zusätzlich kann auch vorgesehen sein, dass in dem mindestens einen Teillastbetrieb die übrigen, nicht-abgeschalteten (d. h. befeuerten) Zylinder ganz oder teilweise mit höherer Last (d. h. zum Beispiel einer weiter geöffneten Drosselklappe) betrieben werden, so dass Pump- und Drosselverluste insgesamt reduziert werden. Somit ergibt sich auch ein höherer Wirkungsgrad im Teillastbereich.

Die Tatsache, dass prinzipiell die erfindungsgemäße Lösung eine Trennung zwischen dem mindestens einen Verbrennungsmotor und der mindestens einen Elektromaschine entbehrlich macht, bringt verschiedene Vorteile mit sich. So kann, wie oben beschrieben, der Verzicht auf eine Trennkupplung mit einer erheblichen Gewichts-, Kosten- und Bauraumersparnis einhergehen. Weiterhin kann auf eine aufwändige Steuerung der Trennkupplung zur momentenneutralen, d. h. ruckfreien, Umschaltung zwischen den verschiedenen Betriebsmodi verzichtet werden.

Da der mindestens eine Verbrennungsmotor auch im abgeschalteten Fall in der Regel mitläuft, kann eine Start- und/oder Wiedereinsetzphase in den Volllastbetrieb kürzer gestaltet werden als bei einem Start vom Stillstand aus. Dies verbessert und vereinfacht auch die Umschaltung zwischen den verschiedenen Betriebsmodi und verbessert das Abgasverhalten.

Ein weiterer Vorteil besteht darin, dass bereits heute dem Stand der Technik entsprechende übliche Nebenaggregate (z. B. ein mit dem Verbrennungsmotor verbundener Klimakompressor) bei dem mindestens einen Verbrennungsmotor verbleiben können, da dieser derart ausgestaltet sein kann, dass dieser stets mitläuft.

Für einen Benutzer verhält sich die Kombination aus der mindestens einen Elektromaschine und dem mindestens einen Verbrennungsmotor mit dem mindestens einen abschaltbaren Zylinder wie eine übliche Verbrennungsmaschine. Somit kann auch ein übliches Automatik- und/oder Handschaltgetriebe verwendet werden.

Die vorgeschlagene Druckbeaufschlagung des mindestens einen abgeschalteten Zylinders, welcher auf die beschriebene Weise mit nachgeschalteter Zündung und/oder auch durch Druckbeaufschlagung mit einem externen Gas oder auf andere Weise (z. B. durch einen Kolben-Teilhub) erfolgen kann, bewirkt eine stark verringerte Schadstoffemission des vorgeschlagenen Hybridantriebs. Insbesondere in der Startphase und/oder der Wiedereinsetzphase in den Volllastbetrieb reagiert die vorgeschlagene Anordnung und Betriebsweise erheblich schneller als herkömmliche Systeme und erweist sich als sparsamer im Verbrauch.

Insgesamt ist der vorgeschlagene Hybridantrieb gut kompatibel zu bisherigen Verbrennungsmotorkonzepten und setzt auf bekannten Techniken auf. Diese Adaption bekannter Techniken bewirkt, dass ein Entwicklungs- beziehungsweise Änderungsaufwand zur Adaption bestehender Systeme stark verringert werden kann.

### Zeichnung

Ausführungsbeispiele der Erfindung sind in den Zeichnungen dargestellt und in der nachfolgenden Beschreibung näher erläutert.

Es zeigen:
- Figuren 1A bis 1D: Ausführungsbeispiele bekannter Hybridantriebs-Konzepte;
- Figur 2: ein Ausführungsbeispiel eines erfindungsgemäßen Hybridantriebs und eines Verfahrens zum Betrieb desselben; und
- Figuren 3A und 3B: zwei Beispiele technischer Möglichkeiten zum Abschalten einzelner Zylinder.

### Ausführungsvarianten

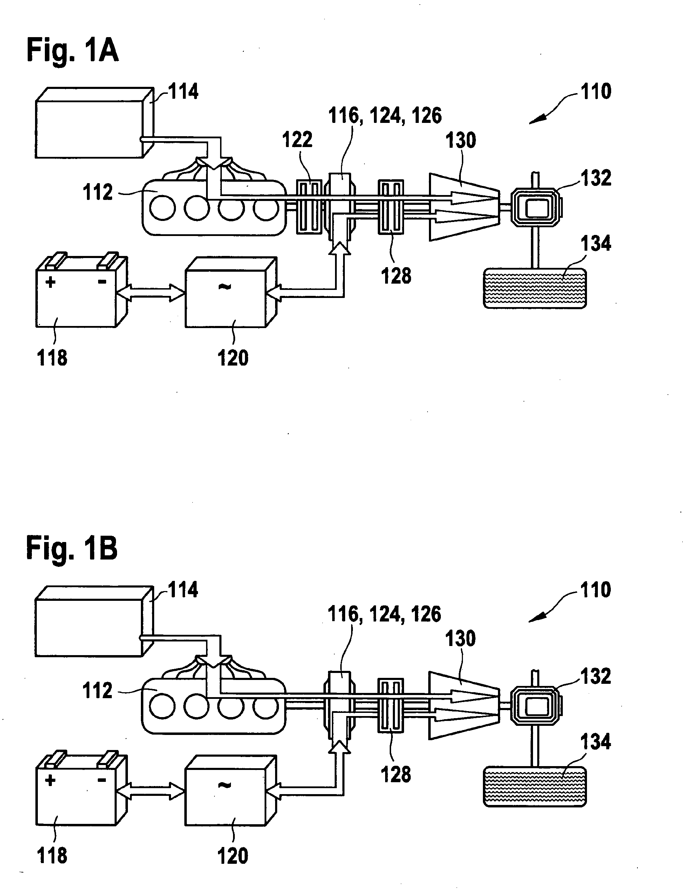

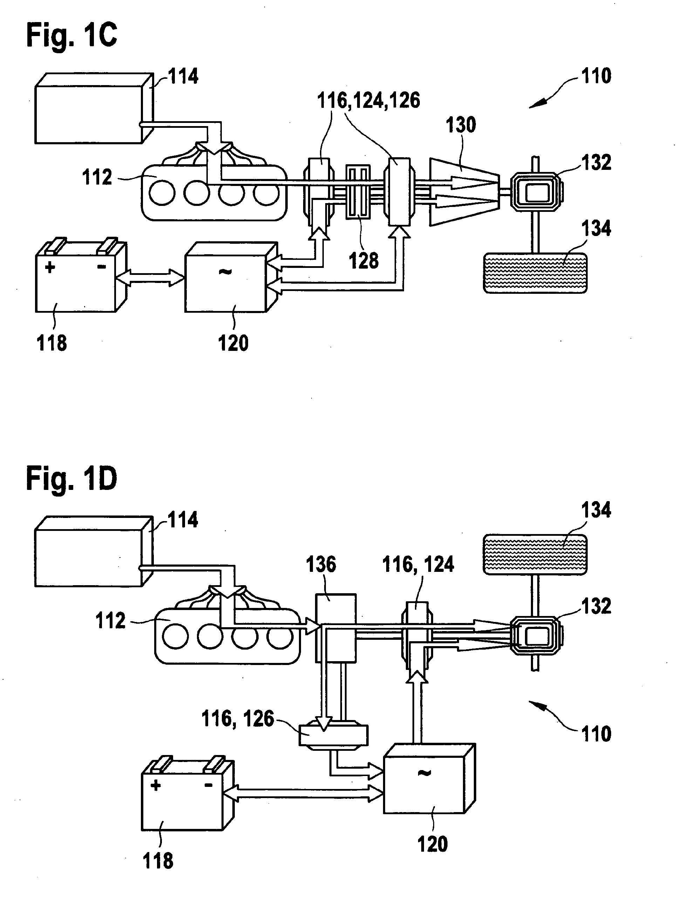

In den Figuren 1A bis 1D sind verschiedene Ausführungsbeispiele von Hybridantrieben 110 dargestellt, welche prinzipiell aus dem Stand der Technik bekannt sind. Dabei zeigen die Ausführungsbeispiele in den Figuren 1A und 1B Parallelhybrid-Anordnungen, das Ausführungsbeispiel in Figur 1C eine serielle Parallelhybrid-Anordnung und das Ausführungsbeispiel in Figur 1D eine verzweigte Hybridanordnung.

Allen Hybridanordnungen gemeinsam ist ein Verbrennungsmotor 112, welcher aus einem Kraftstofftank 114 mit Kraftstoff versorgt wird. Weiterhin ist eine Elektromaschine 116 vorgesehen, welche, je nach Ausführungsbeispiel, unterschiedlich ausgestaltet sein kann, sowie ein Energiespeicher in Form einer Batterie 118 und ein elektrischer Konverter 120.

Bei dem in Figur 1A dargestellten Parallelhybrid-Ausführungsbeispiel ist ein Abtrieb des Verbrennungsmotors 112 über ein erstes Kupplungselement 122 trennbar mit der Elektromaschine 116 verbunden. Diese Elektromaschine 116 vereint im Ausführungsbeispiel gemäß Figur 1A sowohl die Funktionen eines Elektromotors 124 zum Antrieb des Kraftfahrzeugs als auch eine Generatorfunktion 126 zum Aufladen der Batterie 118 über den elektrischen Konverter 120. Je nach Betriebsmodus des Hybridantriebs 110 wird entweder die Elektromotorfunktion 124 von der Batterie 118 mit elektrischer Energie versorgt, oder, im Generatorbetrieb, lädt die Generatorfunktion 126 (z. B. bei einer Bremsenergie-Rekuperation) die Batterie 118 über den elektrischen Konverter 120 auf.

Über ein zweites Kupplungselement 128 ist die Elektromaschine 116 mit einem Getriebe 130 verbunden. Beispielsweise kann es sich dabei um ein kontinuierliches variables Getriebe (englisch continuous variable transmission, CVT) oder um ein elektrisches kontinuierliches variables Getriebe (englisch electric CVT, ECVT) handeln. Abtriebsseitig ist das Getriebe 130 über ein Achsgetriebe 132 schließlich mit mindestens einem Antriebsrad 134 verbunden.

In Figur 1B ist demgegenüber ein so genannter "sanfter" Hybridantrieb 110 dargestellt, bei welchem im Gegensatz zur Ausgestaltung gemäß Figur 1A auf das erste Kupplungselement 122 zwischen dem Verbrennungsmotor 112 und der Elektromaschine 116 verzichtet wird. Dementsprechend sind Verbrennungsmotor 112 und Elektromaschine 116 permanent miteinander verbunden. Die Elektromaschine 116 wirkt insbesondere beim Starten und Stoppen zum Unterstützen des Antriebs beziehungsweise zur Bremsenergie-Rekuperation. Eine Lastpunktverschiebung des Hybridantriebs 110 ist in begrenztem Umfang möglich.

In Figur 1C ist eine weitere Ausführungsform eines Hybridantriebs 110 dargestellt, welche wiederum eine Modifikation des Hybridantriebs 110 gemäß der Figur 1B darstellt. Hierbei ist zwischen das zweite Kupplungselement 128 und das Getriebe 130 eine weitere Elektromaschine 116 eingefügt, welche ebenfalls wieder über eine Elektromotorfunktion 124 und eine Generatorfunktion 126 verfügt. Während die Verbrennungsmotor-seitige Elektromaschine 116 über das zweite Kupplungselement 128 vom Getriebe 130 getrennt werden kann, ist die getriebeseitige Elektromaschine 116 auch im entkuppelten Betrieb mit dem Getriebe 130 verbunden, so dass diese beispielsweise besonders vorteilhaft zur Bremsenergie-Rekuperation genutzt werden kann. Der in Figur 1C dargestellte Hybridantrieb 110, welcher auch als "starker" Hybridantrieb bezeichnet wird, stellt somit eine Variante dar, welche nicht nur beim Starten oder Stoppen des Kraftfahrzeugs genutzt werden kann, sondern welcher auch ein elektrisches Fahren ermöglicht. Auch eine Lastpünktverschiebung ist möglich.

In Figur 1D ist schließlich ein Ausführungsbeispiel eines verzweigten Hybridantriebs 110 dargestellt. Bei diesem Ausführungsbeispiel sind die beiden Funktionen der Elektromaschine 116, nämlich die Elektromotorfunktion 124 und die Generatorfunktion 126, getrennt ausgeführt. Dabei ist der Verbrennungsmotor 112 über seinen Abtrieb mit einem Planetengetriebe 136 verbunden, welches wiederum mit dem Antrieb der Elektromotorfunktion 124 verbunden ist. Die Elektromotorfunktion 124 ist ihrerseits über ihren Abtrieb mit dem Achsgetriebe 132 verbunden.

Weiterhin ist das Planetengetriebe 136 mit dem Antrieb der Generatorfunktion 126 verbunden, so dass über die Generatorfunktion 126 und den elektrischen Konverter 120 die Batterie 118 aufgeladen werden kann. Neben den Betriebsmöglichkeiten, welche die Anordnung gemäß Figur 1C bietet, bietet der Hybridantrieb 110 gemäß dem Ausführungsbeispiel in Figur 1D zusätzlich die Möglichkeit einer Drehzahlverschiebung, da die Drehzahl über das Planetengetriebe 136 eingestellt werden kann.

Die in den Figuren 1A bis 1D dargestellten Realisierungen von Hybridantrieben 110 stellen nur einen Teil der technischen Möglichkeiten dar und zeigen den unterschiedlich großen Realisierungsaufwand und die sich damit ergebenden Betriebsmöglichkeiten, welche auf Kraftstoffersparnis abzielen. Man erkennt, dass bei allen Ausführungsbeispielen über (mindestens) ein Kupplungselement 122, 128 beziehungsweise ein Verteilergetriebe (hier z. B. in Form des Planetengetriebes 136) eine Aufteilung beziehungsweise Umschaltung einer Drehmomenterzeugung von Elektromaschine 116 und Verbrennungsmotor 112 erfolgt. Dieses Kupplungselement 122, 128 beziehungsweise Verteilergetriebe ist auch notwendig, um die Elektromaschine 116 sowohl in Elektromotorfunktion 124 als auch in Generatorfunktion 126 zu betreiben, um im Schub- und Brems-Betrieb eine Energierückgewinnung und Energiespeicherung in der dargestellten Batterie 118 zu ermöglichen.

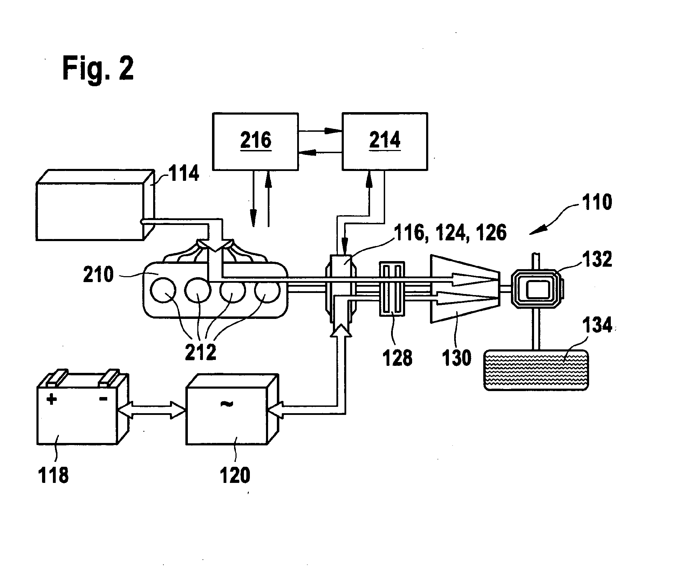

In Figur 2 ist eine erfindungsgemäße Ausgestaltung eines Hybridantriebs 110 mit einem Verbrennungsmotor 210 mit schaltbaren Zylindern 212 dargestellt. Abgesehen von der Tatsache, dass die einzelnen Zylinder 212 des Verbrennungsmotors 210 zu- beziehungsweise abschaltbar sind (beispielsweise individuell und/oder als Bank), entspricht der Aufbau des Hybridantriebs 110 gemäß Figur 2 dem in dem Ausführungsbeispiel gemäß Figur 1B oben beschriebenen Ausführungsbeispiel, so dass für das Zusammenwirken der Komponenten weitgehend auf dieses Ausführungsbeispiel verwiesen werden kann.

Weiterhin weist der Hybridantrieb 110 in dem Ausführungsbeispiel gemäß Figur 2 einen Lastregler 214 und ein Motorsteuerungsgerät 216 auf. Der Lastregler ist ausgestaltet, um entsprechend eines Bedarfs (z. B. aktueller Geschwindigkeiten, Drehzahlen und/oder Beschleunigungswünsche) eine optimale Nutzung der Elektromaschine 116 als Elektromotorfunktion 124 oder Generatorfunktion 126 zu gewährleisten. Das Motorsteuerungsgerät 216 wiederum ist ausgestaltet, um entsprechend einem Leistungsbedarf den Verbrennungsmotor 210 zu steuern. Lastregler 214 und Motorsteuerungsgerät 216 können als getrennte Module realisiert sein oder auch als unterschiedliche Funktionalitäten ein und desselben Moduls. Beispielsweise kann die Trennung durch verschiedene Computerprogramm-Module in einem Mikrocontroller (z. B. einem eingebetteten System) realisiert sein. Die Zu- beziehungsweise Abschaltung einzelner Zylinder 212 des Verbrennungsmotors 210 kann durch den Lastregler 214 oder, bevorzugt, auch durch das Motorsteuerungsgerät 216 erfolgen.

Prinzipielle Idee des erfindungsgemäßen Aufbaus ist es, den Verbrennungsmotor 210 mit (vorzugsweise individuell) schaltbaren Zylindern 212 mit der Elektromaschine 116 in einem bekannten Hybridantrieb-Aufbau zu kombinieren. Somit sind mindestens zwei Betriebsmodi denkbar, nämlich ein Volllastbetrieb, in welchem alle Zylinder 212 betrieben werden, und mindestens ein Teillastbetrieb, in welchem mindestens ein Zylinder 212 abgeschaltet wird. Auch ein Minimallastbetrieb ist denkbar, in welchem der Verbrennungsmotor 210 vollständig abgeschaltet wird, so dass die Drehmomenterzeugung dann vollständig von der Elektromaschine 116 übernommen wird. In diesem Fall kann dann die Elektromaschine 116 die Rolle einer nicht abgeschalteten Bank eines im HMB-Modus (Halbmotorbetrieb, siehe oben) betriebenen Verbrennungsmotors 210 übernehmen. In den übrigen Fahrzuständen kann die Elektromaschine 116 motorisch unterstützend zur Lastpunktverschiebung des Verbrennungsmotors oder generatorisch im Schub- und/oder Bremsbetrieb zur Energierückgewinnung und Bordnetzsicherstellung betrieben werden. Es ergeben sich damit ähnliche Möglichkeiten wie beim oben dargestellten Parallelhybrid, mit dem Unterschied, dass grundsätzlich keine Trennkupplungen (122 in Figur 1A) benötigt werden.

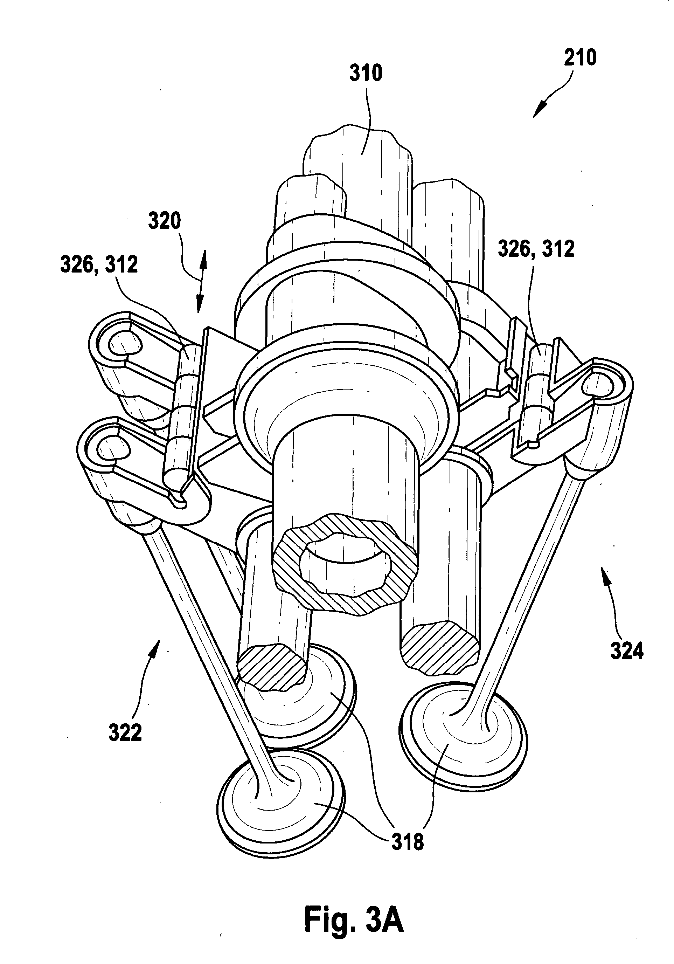

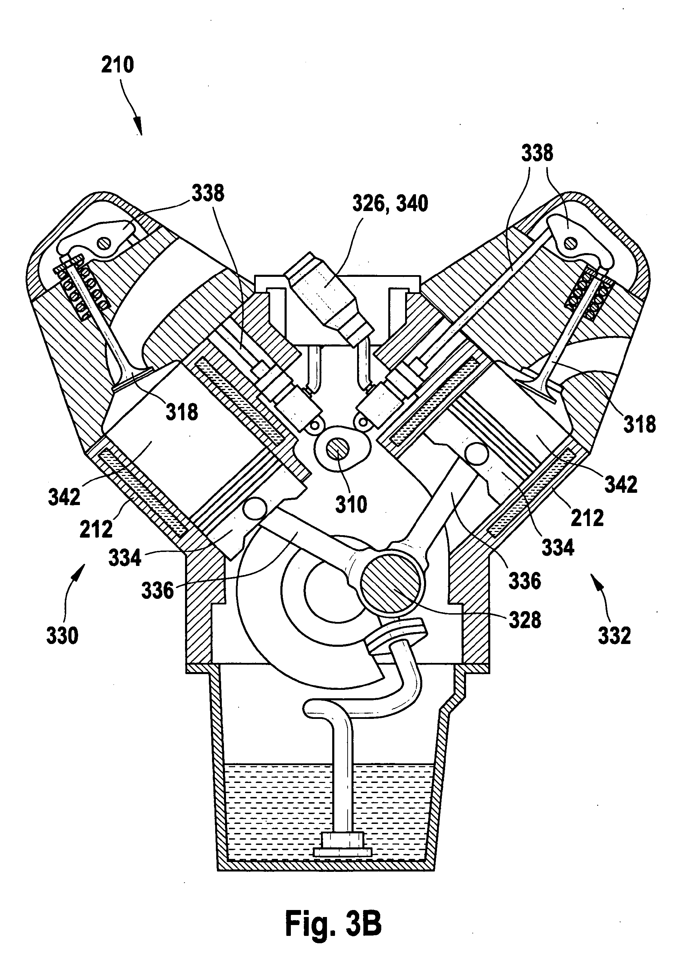

Bei der Realisierung des Verbrennungsmotors 210 mit schaltbaren Zylindern 212 ergeben sich verschiedene Möglichkeiten, wobei wiederum weitgehend auf aus dem Stand der Technik bekannte Systeme zurückgegriffen werden kann. Beispiele derartiger Verbrennungsmotoren 210 sind in den Figuren 3A und 3B dargestellt.

Bei dem in Figur 3A dargestellten Beispiel ist eine Nockenwelle 310 über einen Verriegelungskolben 312 und Primärhebel 314 und Sekundärhebel 316 mit Ventilen 318 der (in Figur 3A nicht vollständig dargestellten) Zylinder 212 verbunden. Die Vernegelungskolben 312 sind mit unterschiedlichen Durchmessern ausgestattet, so dass bei Verschiebung der Verriegelungskolben 312 in der in Figur 3A symbolisch mit der Bezugsziffer 320 bezeichneten Schaltrichtung in einer Stellung eine Kraftübertragung von der Nockenwelle 310 auf die Ventile 318 erfolgt, und in einer anderen Schaltstellung nicht. Auf diese Weise können einzelne der beiden Ventilbänke 322, 324 gezielt zu- oder abgeschaltet werden. Die Verriegelungskolben 312 wirken also in diesem Ausführungsbeispiel als Stellglied 326 zum An- beziehungsweise Abschalten der Zylinder 212.

In Figur 3B ist ein zweites Beispiel eines Verbrennungsmotors 210 mit schaltbaren Zylindern 212 in Schnittdarstellung gezeigt. Bei dem dargestellten Ausführungsbeispiel in Figur 3B handelt es sich um einen V-Motor, mit einer Kurbelwelle 328 und zwei Zylinderbänken 330, 332, deren Zylinderkolben 334 jeweils über Pleuel 336 mit der Kurbelwelle 328 verbunden sind.

Weiterhin ist in dem Verbrennungsmotor 210 gemäß Figur 3B wiederum eine Nockenwelle 310 vorgesehen, welche über eine hydraulische Hebelverbindung 338 die Ventile 318 der beiden Zylinderbänke 330, 332 steuert.

Im Gegensatz zu dem als Verriegelungskolben 312 ausgeführten Stellglied 326 gemäß dem Ausführungsbeispiel in Figur 3A ist das Stellglied 326 in den Ausführungsbeispiel gemäß Figur 3B als elektrohydraulisches Stellglied 340 ausgestaltet, welches insbesondere ein Solenoid-Ventil zur Druckentlastung der Hebelverbindung 338 beinhaltet. Auf diese Weise können beispielsweise einzelne hydraulische Druckstößel der Hebelverbindung 338 druckentlastet werden, so dass keine Kraftübertragung von der Nockenwelle 310 auf die Ventile 318 erfolgt. Erfindungsgemäß wird der Hybridantrieb 110 insbesondere über eine entsprechende Ausgestaltung von Lastregler 214 und/oder Motorsteuerungsgerät 216 derart betrieben, dass beim Abschalten einzelner Zylinder 212 der Brennraum 342 mit einem Überdruck beaufschlagt wird. Auf diese Weise wird verhindert, dass Öl aus dem die Kurbelwelle 328 umgebenden Kurbelgehäuse in den Brennraum 342 gelangen kann. Zu diesem Zweck wird vorteilhafterweise vor dem Abschaltvorgang der Brennraum 342 nochmals mit Verbrennungsgemisch befüllt, und es wird, bei geschlossenen Ventilen 318 (Verdichtungstakt), ein Zündvorgang gestartet. Die dabei entstehenden Verbrennungsgase beaufschlagen den abzuschaltenden Zylinder 212 mit einem Überdruck (Arbeitstakte). Anschließend wird mittels des beschriebenen Stellglieds 326 der entsprechende Zylinder 212 (beziehungsweise eine Gruppe von Zylindern 212) abgeschaltet und von der Nockenwelle 310 getrennt, so dass ein Ausstoßen der Verbrennungsgase (Auslasstakt) nicht stattfindet. Die Verbrennungsgase verbleiben damit so lange im Brennraum 342, bis der mindestens eine Zylinder 212 aufgrund einer Momentenanforderung (z. B. aufgrund eines Fahrerwunsches und/oder einer Anforderung durch das Motorsteuerungsgerät 216 und/oder den Lastregler 214) wieder benötigt wird.

Neben den in den Figuren 3A und 3B beschriebenen Stellgliedern 326 sind weitere Konzepte von Stellgliedern möglich, um eine Kraftübertragung zwischen Nockenwelle 310 und den Zylindern 212 gezielt an- beziehungsweise abzuschalten.

## Patentansprüche

1. Hybridantrieb (110), insbesondere zum Antrieb eines Kraftfahrzeugs, aufweisend mindestens einen Verbrennungsmotor (112; 210) mit mindestens zwei Zylindern (212) sowie mindestens eine Elektromaschine (116) mit mindestens einer Elektromotorfunktion (124) und mindestens einer Generatorfunktion (126), wobei der Hybridantrieb (110) eingerichtet ist, um in einem Volllastbetrieb alle Zylinder (212) des mindestens einen Verbrennungsmotors (112; 210) zu betreiben und um in mindestens einem Teillastbetrieb mindestens einen der mindestens zwei Zylinder (212) abzuschalten, wobei mindestens ein weiterer der mindestens zwei Zylinder (212) des mindestens einen Verbrennungsmotors (112; 210) betrieben wird, **dadurch gekennzeichnet, dass** in dem mindestens einen Teillastbetrieb beim Abschalten der mindestens eine abzuschaltende Zylinder (212) mit Verbrennungsgemisch befüllt wird und anschließend ein Zündvorgang gestartet wird, wobei Ventile (318) des mindestens einen Zylinders (212) geschlossen verbleiben, so dass der mindestens eine Zylinder (212) mit einem Überdruck durch Verbrennungsgase beaufschlagt ist, und wobei die Verbrennungsgase so lange im Brennraum (342) des abgeschalteten Zylinders (212) verbleiben, bis der mindestens eine abgeschaltete Zylinder (212) aufgrund einer Momentenanforderung wieder benötigt wird.

2. Hybridantrieb (110) gemäß dem vorhergehenden Anspruch, **dadurch gekennzeichnet, dass** mindestens ein Lastregler (214) und/oder mindestens ein Motorsteuerungsgerät (216) vorgesehen ist, wobei der mindestens eine Lastregler (214) und/oder das mindestens eine Motorsteuerungsgerät (216) ausgestaltet sind, um eine Sollleistung und/oder eine Solldrehzahl und/oder ein Solldrehmoment des mindestens einen Verbrennungsmotors (112; 210) zu ermitteln und entsprechend dieser Ermittlung den Volllastbetrieb und/oder einen Teillastbetrieb auszuwählen.

3. Hybridantrieb (110) gemäß einem der beiden vorhergehenden Ansprüche, wobei der Hybridantrieb (110) insbesondere in Parallelhybridanordnung ausgestaltet ist, **dadurch gekennzeichnet, dass** der mindestens eine Verbrennungsmotor (112; 210) unmittelbar, insbesondere ohne Zwischenschaltung eines Kupplungselements (122) oder eines Verteilergetriebes (136), mit der mindestens einen Elektromaschine (116) verbunden ist.

4. Hybridantrieb (110) gemäß einem der beiden Ansprüche 1 oder 2, **dadurch gekennzeichnet, dass** zwischen dem mindestens einen Verbrennungsmotor (112; 210) und der mindestens einen Elektromaschine (116) mindestens ein mindestens zweistufiges Getriebe vorgesehen ist, wobei das mindestens eine zweistufige Getriebe mindestens eine dem Volllastbetrieb zugeordnete erste Stufe und mindestens eine weitere, dem mindestens einen Teillastbetrieb zugeordnete weitere Stufe aufweist.

5. Hybridantrieb (110) gemäß einem der vorhergehenden Ansprüche, **dadurch gekennzeichnet, dass** der Hybridantrieb (110) ausgestaltet ist, um in dem mindestens einen Teillastbetrieb mindestens einen nicht abgeschalteten Zylinder (212) mit höherer Last zu betreiben als im Volllastbetrieb.

6. Hybridantrieb (110) gemäß einem der vorhergehenden Ansprüche, **gekennzeichnet durch** mindestens ein dem mindestens einen Verbrennungsmotor (112; 210) zugeordnetes Stellglied (326), welches ausgestaltet ist, um mindestens einen Zylinder (212) des mindestens einen Verbrennungsmotors (112; 210) abzuschalten.

7. Hybridantrieb (110) gemäß dem vorhergehenden Anspruch, **dadurch gekennzeichnet, dass** das mindestens eine Stellglied (326) ausgestaltet ist, um mindestens eine Kraftübertragung zwischen mindestens einer Nockenwelle (310) des mindestens einen Verbrennungsmotors (112; 210) und mindestens einem Ventil (318) des mindestens einen Verbrennungsmotors (112; 210) zu unterbrechen.

8. Hybridantrieb (110) gemäß einem der beiden vorhergehenden Ansprüche, **dadurch gekennzeichnet, dass** das mindestens eine Stellglied (326) mindestens einen Verriegelungskolben (312) und/oder mindestens einen elektromechanischen Wandler aufweist, insbesondere mindestens einen der nachfolgenden Wandler: ein hydraulisches Stellglied, insbesondere ein elektrohydraulisches Stellglied (340); ein elektromagnetisches Stellglied.

9. Verfahren zur Steuerung eines Hybridantriebs (110), wobei der Hybridantrieb (110) mindestens einen Verbrennungsmotor (112; 210) mit mindestens zwei Zylindern (212) sowie mindestens eine Elektromaschine (116) mit mindestens einer Elektromotorfunktion (124) und mindestens einer Generatorfunktion (126) aufweist, wobei mindestens eine Teillaststufe und mindestens eine Volllaststufe vorgesehen ist, wobei in der mindestens einen Volllaststufe alle Zylinder (212) des mindestens einen Verbrennungsmotors (112; 210) betrieben werden und wobei in der mindestens einen Teillaststufe mindestens ein Zylinder (212) des mindestens einen Verbrennungsmotors (112; 210) abgeschaltet wird und wobei mindestens ein zweiter Zylinder (212) betrieben wird, **dadurch gekennzeichnet, dass** beim Abschaltender mindestens eine abzuschaltende Zylinder (212) mit Verbrennungsgemisch befüllt wird und anschließend ein Zündvorgang gestartet wird, wobei Ventile (318) des mindestens einen Zylinders (212) geschlossen verbleiben, so dass der mindestens eine Zylinder (212) mit einem Überdruck durch Verbrennungsgase beaufschlagt ist, und wobei die Verbrennungsgase so lange im Brennraum (342) des abgeschalteten Zylinders (212) verbleiben, bis der mindestens eine abgeschaltete Zylinder (212) aufgrund einer Momentenanforderung wieder benötigt wird.

10. Computerprogramm mit Programmcode zur Durchführung des Verfahrens gemäß einem der vorhergehenden Verfahrensansprüche, wenn das Programm auf einem Computer oder Computer-Netzwerk, insbesondere auf einem Motorsteuerungsgerät (216) und/oder einem Lastregler (214), ausgeführt wird.

## Claims

1. Hybrid drive (110), in particular for driving a motor vehicle, having at least one internal combustion engine (112; 210) with at least two cylinders (212), and also having at least one electrical machine (116) with at least one electric motor function (124) and at least one generator function (126), with the hybrid drive (110) being designed to operate all the cylinders (212) of the at least one internal combustion engine (112; 210) in a full-load mode and to deactivate at least one of the at least two cylinders (212) in at least one partial-load mode, with at least one further one of the at least two cylinders (212) of the at least one internal combustion engine (112; 210) being operated, **characterized in that**, in the at least one partial-load mode, in the event of deactivation, the at least one cylinder (212) which is to be deactivated is filled with combustion mixture and then an ignition process is started, with valves (318) of the at least one cylinder (212) remaining closed, so that the at least one cylinder (212) is acted on with an excess pressure by combustion gases, and with the combustion gases remaining in the combustion chamber (342) of the cylinder (212), which is deactivated, until the at least one cylinder (212) which is deactivated is required again on account of a torque requirement.

2. Hybrid drive (110) according to the preceding claim, **characterized in that** at least one load regulator (214) and/or at least one motor controller device (216) is provided, with the at least one load regulator (214) and/or the at least one motor controller device (216) being designed to establish a setpoint power and/or a setpoint rotation speed and/or a setpoint torque of the at least one internal combustion engine (112; 210) and to select the full-load mode and/or a partial-load mode in accordance with these established values or this established value.

3. Hybrid drive (110) according to one of the two preceding claims, with the hybrid drive (110) being designed, in particular, in parallel hybrid arrangement, **characterized in that** the at least one internal combustion engine (112; 210) is connected directly, in particular without the interposition of a clutch element (122) or a transfer case (136), to the at least one electrical machine (116).

4. Hybrid drive (110) according to one of the two Claims 1 and 2, **characterized in that** at least one at least two-stage gear mechanism is provided between the at least one internal combustion engine (112; 210) and the at least one electrical machine (116), with the at least one two-stage gear mechanism having at least one first stage which is associated with the full-load mode and at least one further stage which is associated with the at least one partial-load mode.

5. Hybrid drive (110) according to one of the preceding claims, **characterized in that** the hybrid drive (110) is designed to operate at least one cylinder (212), which is not deactivated, with a higher load in the at least one partial-load mode than in the full-load mode.

6. Hybrid drive (110) according to one of the preceding claims, **characterized by** at least one actuating element (326) which is associated with the at least one internal combustion engine (112; 210) and which is designed to deactivate at least one cylinder (212) of the at least one internal combustion engine (112; 210).

7. Hybrid drive (110) according to the preceding claim, **characterized in that** the at least one actuating element (326) is designed to interrupt at least a transmission of force between at least one camshaft (310) of the at least one internal combustion engine (112; 210) and at least one valve (318) of the at least one internal combustion engine (112; 210).

8. Hybrid drive (110) according to one of the two preceding claims, **characterized in that** the at least one actuating element (326) has at least one lock piston (312) and/or at least one electromechanical transducer, in particular at least one of the following transducers: a hydraulic actuating element, in particular an electrohydraulic actuating element (340); an electromagnetic actuating element.

9. Method for controlling a hybrid drive (110), with the hybrid drive (110) having at least one internal combustion engine (112; 210) with at least two cylinders (212) and also having at least one electrical machine (116) with at least one electric motor function (124) and at least one generator function (126), with at least one partial-load stage and at least one full-load stage being provided, with all the cylinders (212) of the at least one internal combustion engine (112; 210) being operated in the at least one full-load stage, and with at least one cylinder (212) of the at least one internal combustion engine (112; 210) being deactivated in the at least one partial-load stage, and with at least one second cylinder (212) being operated, **characterized in that**, in the event of deactivation, the at least one cylinder (212) which is to be deactivated is filled with combustion mixture and then an ignition process is started, with valves (318) of the at least one cylinder (212) remaining closed, so that the at least one cylinder (212) is acted on with an excess pressure by combustion gases, and with the combustion gases remaining in the combustion chamber (342) of the cylinder (212), which is deactivated, until the at least one cylinder (212) which is deactivated is required again on account of a torque requirement.

10. Computer program with program code for carrying out the method according to one of the preceding method claims when the program is run on a computer or computer network, in particular on a motor controller device (216) and/or a load regulator (214).

## Revendications

1. Entraînement hybride (110), en particulier destiné à entraîner un véhicule automobile,
présentant au moins un moteur à combustion interne (112; 210) doté d'au moins deux cylindres (212) ainsi qu'au moins une machine électrique (116) qui présente au moins une fonction (124) de moteur électrique et au moins une fonction (126) de génératrice,
l'entraînement hybride (110) étant conçu pour utiliser en fonctionnement à pleine charge tous les cylindres (212) du ou des moteurs à combustion interne (112; 210) et pour débrancher au moins un des deux ou plusieurs cylindres (212) dans au moins un fonctionnement à charge partielle, au moins un autre des deux ou plusieurs cylindres (212) du ou des moteurs à combustion interne (112; 210) étant alors utilisé, **caractérisé en ce que**
dans le ou les fonctionnements à charge partielle, lors du débranchement, le ou les cylindres (212) à débrancher sont remplis d'un mélange de combustion et une opération d'allumage est ensuite lancée, des soupapes (318) du ou des cylindres (212) restant fermées de sorte que les gaz de combustion appliquent une surpression dans le ou les cylindres (212), les gaz de combustion restant dans la chambre de combustion (342) du cylindre (212) débranché jusqu'à ce que le ou les cylindres (212) débranchés soient de nouveau nécessaires à cause d'une demande de couple.

2. Entraînement hybride (110) selon la revendication précédente, **caractérisé en ce qu'**au moins un régulateur de charge (214) et/ou au moins un appareil (216) de commande de moteur sont prévus, le ou les régulateurs de charge (214) et/ou le ou les appareils (216) de commande du moteur étant configurés pour déterminer une puissance de consigne et/ou une vitesse de rotation de consigne et/ou un couple de rotation de consigne du ou des moteurs à combustion interne (112; 210) et pour sélectionner le fonctionnement à pleine charge et/ou un fonctionnement à charge partielle en fonction de cette détermination.

3. Entraînement hybride (110) selon l'une des deux revendications qui précèdent, l'entraînement hybride (110) étant configuré en particulier en agencement hybride parallèle, **caractérisé en ce que** le ou les moteurs à combustion interne (112; 210) sont reliés directement, en particulier sans l'interposition d'un élément d'accouplement (122) ou d'une transmission de distribution (136), à la ou aux machines électriques (116).

4. Entraînement hybride (110) selon l'une des deux revendications 1 ou 2, **caractérisé en ce qu'**au moins une transmission à au moins deux rapports est prévue entre le ou les moteurs à combustion interne (112; 210) et la ou les machines électriques (116), la ou les transmissions à deux rapports présentant au moins un premier rapport associé au fonctionnement à pleine charge et au moins un autre rapport associé à la ou aux fonctionnements à charge partielle.

5. Entraînement hybride (110) selon l'une des revendications précédentes, **caractérisé en ce que** dans le ou les fonctionnements à charge partielle, l'entraînement hybride (110) est configuré pour utiliser au moins un cylindre (212) non débranché à une charge plus élevée qu'en fonctionnement à pleine charge.

6. Entraînement hybride (110) selon l'une des revendications précédentes, **caractérisé par** au moins un organe de réglage (326) associé au moteur ou aux moteurs à combustion interne (112; 210) et configuré pour débrancher au moins un cylindre (212) du ou des moteurs à combustion interne (112; 210).

7. Entraînement hybride (110) selon la revendication précédente, **caractérisé en ce que** le ou les organes de réglage (326) sont configurés pour interrompre au moins une transmission de force entre au moins un arbre à cames (310) du ou des moteurs à combustion interne (112; 210) et au moins une soupape (318) du ou des moteurs à combustion interne (112; 210).

8. Entraînement hybride (110) selon l'une des deux revendications précédentes, **caractérisé en ce que** le ou les organes de réglage (326) présentent au moins un piston de verrouillage (312) et/ou au moins un convertisseur électromagnétique, et en particulier au moins l'un des convertisseurs suivants : un organe de réglage hydraulique, en particulier un organe de réglage électrohydraulique (340), et un organe de réglage électromagnétique.

9. Procédé de commande d'un entraînement hybride (110), l'entraînement hybride (110) présentant au moins un moteur à combustion interne (112; 210) doté d'au moins deux cylindres (212) ainsi qu'au moins une machine électrique (116) qui présente au moins une fonction (124) de moteur électrique et au moins une fonction (126) de génératrice,
au moins un étage à charge partielle et au moins un étage à pleine charge étant prévus,
tous les cylindres (212) du ou des moteurs à combustion interne (112; 210) étant utilisés dans l'étage à pleine charge, au moins un cylindre (212) du ou des moteurs à combustion interne (112; 210) étant débranché et au moins un deuxième cylindre (212) étant utilisé dans le ou les étages à charge partielle, **caractérisé en ce que**
lors du débranchement, le ou les cylindres (212) à débrancher sont remplis d'un mélange de combustion et une opération d'allumage est ensuite lancée, des soupapes (318) du ou des cylindres (212) restant fermées de sorte que les gaz de combustion appliquent une surpression dans le ou les cylindres (212), les gaz de combustion restant dans la chambre de combustion (342) du cylindre (212) débranché jusqu'à ce que le ou les cylindres (212) débranchés soient de nouveau nécessaires à cause d'une demande de couple.

10. Programme informatique doté de codes de programme en vue de l'exécution du procédé selon l'une des revendications de procédé qui précèdent, lorsque le programme est exécuté sur un ordinateur ou un réseau d'ordinateurs et en particulier sur un appareil (216) de commande de moteur et/ou sur un régulateur de charge (214).
